# EUROPÄISCHE PATENTSCHRIFT

(11) **EP 0 497 381 B1**
(45) Veröffentlichungstag und Bekanntmachung des Hinweises auf die Patenterteilung: **30.08.1995**
(21) Anmeldenummer: 92101739.8
(22) Anmeldetag: 03.02.1992
(51) Int. Cl.: A01G 9/14

(54) **Gärtnereitisch**
Table for the horticulture
Table pour l'horticulture

(30) Priorität: 01.02.1991 DE 9101146 U
(43) Veröffentlichungstag der Anmeldung: 05.08.1992
(73) Patentinhaber: Marx, Hubert, D-33102 Paderborn (DE)
(72) Erfinder: Marx, Hubert, D-33102 Paderborn (DE)
(74) Vertreter: TER MEER STEINMEISTER & PARTNER GbR

(56) Entgegenhaltungen:
- DE-A- 2 926 203
- US-A- 3 915 442

## Beschreibung

Die Erfindung betrifft eine Einrichtung zum Verfahren eines Gärtnereitisches auf Laufschienen.

Die in Gärtnereien vorhandenen Tische mit verhältnismäßig großen Ausmaßen werden als Pflanzen- oder Beettische genutzt und sind nur in eine Richtung hin- und herfahrbar und müssen für eine veränderte Wegebildung durch Hubeinrichtungen versetzt oder aus dem Gewächshaus herausgefahren werden.

Aus DE-A-29 26 203 ist eine Einrichtung zum Verfahren solcher Gärtnereitische mit den im Oberbegriff des Anspruchs 1 angegebenen Merkmalen bekannt. Bei dieser Einrichtung werden die Laufschienen durch Rohre gebildet, und an der Unterseite der Tischplatte befestigte Laufkörper weisen Laufrollen auf, die um eine feste Achse drehbar gelagert sind und als Lauffläche eine an den Außenquerschnitt der Rohre angepaßte Hohlkehle besitzen, so daß sie mit den Laufschienen in Führungseingriff stehen. Auch hier ist deshalb der Gärtnereitisch nur in eine Richtung verfahrbar.

Aufgabe der Erfindung ist es, die bekannte Einrichtung dahingehend zu verbessern, daß der Gärtnereitisch durch einfache Mittel sowohl in Längs- als auch in Querrichtung verfahren werden kann und somit in seiner Plazierung und zur gewünschten Wegebildung variabler ist.

Diese Aufgabe wird erfindungsgemäß mit den in Anspruch 1 angegebenen Merkmalen gelöst.

Bei der erfindungsgemäßen Einrichtung weisen die in den Eckbereichen der Tischplatte angebrachten Laufkörper jeweils zwei Laufkugeln auf, die entweder in einem gemeinsamen Gehäuse oder jeweils in einem eigenen Gehäuse allseitig frei drehbar gelagert sind. Die Stirnseiten des bzw. der Gehäuse, die die als Abwälzteile dienenden Kalottenbereiche der Laufkugeln freigeben, stehen derart schräg zur Tischplattenebene, daß sie mit den Laufkugeln ein Laufprisma bilden, das mit dem als Laufschiene dienenden Rohr in Zweipunktanlage steht. Da außerdem die rohrförmigen, einen kreisförmigen Querschnitt aufweisenden Laufschienen auf dem Erdboden freiliegen, läßt sich der Gärtnereitisch nicht nur in Längsrichtung der Laufschienen verfahren, sondern auch in deren Querrichtung, indem die Laufschienen auf dem Erdboden abrollen und den Tisch mit den an den Laufschienen abwälzenden Laufkugeln mitnehmen. Hierdurch ist eine sehr bewegliche, wahlweise Wegebildung und eine leicht veränderbare Plazierung der Gärtnereitische in einem Gewächshaus möglich.

Vorteilhafte Ausgestaltungen und Weiterbildungen der Erfindung sind in den Unteransprüchen angegeben.

Die Laufkörper sind mit geringem Abstand unter der Tischplatte angeordnet, so daß die Tischplatte bodennah verfahrbar ist und somit in sich eine gute Stabilität hat.

Weiterhin lassen sich, wie an sich bereits aus DE-A-29 26 203 bekannt ist, im Abstand oberhalb der Tischplatte abgestützte zusätzliche Laufschienen anordnen und beim Aneinanderreihen mehrerer Tische somit durchgehende Laufschienen bilden, wodurch oberhalb der unteren Tische weitere Tische in der zweiten Ebene längsverfahrbar und mit den unteren Tischen auf den bodenseitigen Rohren querverfahrbar angeordnet sind, wodurch eine raumausnutzende und optimal bewegliche Tischgruppe gebildet wird.

Auf den Zeichnungen ist ein Ausführungsbeispiel der Erfindung dargestellt, welches nachfolgend näher erläutert wird. Es zeigt:

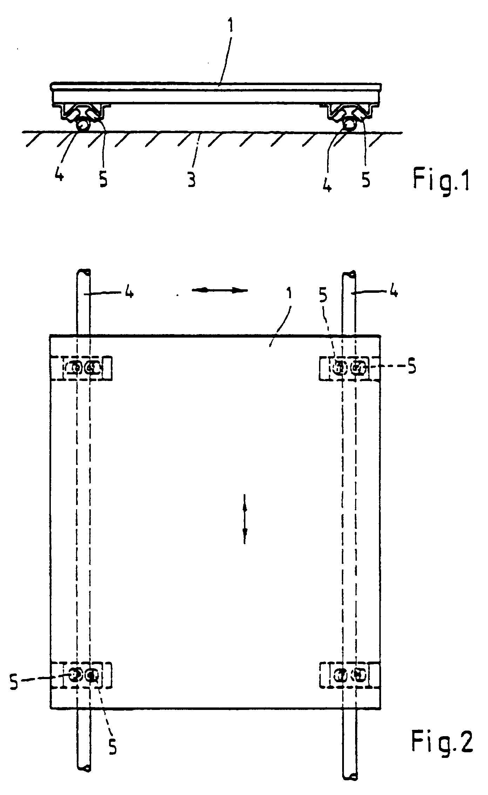

- Fig. 1: eine schematische Vorderansicht eines lose auf dem Erdboden aufliegenden Rohres in Rohr-Längsrichtung verfahrbaren Gärtnereitisches, der mit den Rohren auch querverfahrbar ist, und zwar durch Abrollen der Rohre auf dem Erdboden,
- Fig. 2: eine schematische Draufsicht auf den verfahrbaren Gärtnereitisch,
- Fig. 3: eine schematische Seitenansicht des Gärtnereitisches,
- Fig. 4: eine Vorderansicht zweier, den Gärtnereitisch auf einem Rohr verfahrbarer, in je einem Gehäuse drehbar gelagerter, kugelförmiger Laufkörper, die eine prismaförmige Laufrinne ergeben,
- Fig. 5: eine schematische Vorderansicht eines Gehäuses mit zwei darin drehbaren, kugelförmigen Laufkörpern,
- Fig. 6: eine schematische Seitenansicht aneinandergereihter Gärtnereitische und auf diesen angeordneten Laufschienen für eine zweite Fahrebene eines oder mehrerer Gärtnereitische.

Der fahrbare Gärtnereitisch in Form eines Pflanz- oder Beettisches weist eine vorzugsweise großflächige und vorzugsweise rechteckige Tischplatte (1) auf, unter der in den vier Eckbereichen jeweils zwei ein Laufprisma (2) bildende, die Tischplatte (1) auf von vorzugsweise auf dem Erdboden (3) freiliegenden Rohren gebildeten Laufschienen (4) verfahrende Laufkörper (5) angeordnet sind.

Jeder Laufkörper (5) ist in bevorzugter Weise von einer sich am Rohr (4) abwälzenden Laufkugel gebildet

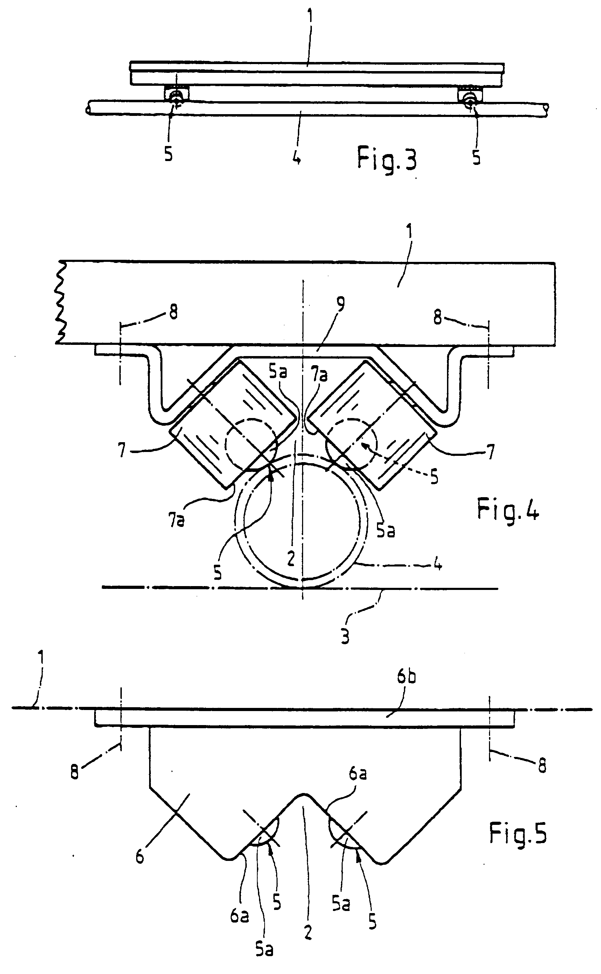

Die beiden Laufkugeln (5) jedes Laufkugelpaares lassen sich in einem gemeinsamen Gehäuse (6) allseitig und frei drehbar lagern (Fig. 5) oder können jeweils in einem eigenen Gehäuse (7) allseitig und frei drehbar gelagert sein (Fig. 4).

Die beiden Laufkugeln (5) ragen mit ihrem Kalottenbereich (5a) - Abwälzteil - aus je einer Stirnseite (6a, 7a) des bzw. der Gehäuse (6, 7) heraus und diese beiden Stirnseiten (6a, 7a) stehen unter einem Winkel von 45° zur Tischplattenebene und bilden mit den Laufkugeln (5) ein 90°-Laufprisma, welches eine Zweipunktanlage am Rohr (4) ergibt.

Das die beiden Laufkugeln (5) aufweisende gemeinsame Gehäuse (6) ist mit einem Gehäuseflansch (6b) und durch Schrauben (8) od. dgl. unter der Tischplatte (1) befestigt (Fig. 5) und die beiden Gehäuse (7) des Laufkugelpaares sind mittels einer Halterung (9) und durch Schrauben od. dgl. unter der Tischplatte (1) festgelegt (Fig. 4).

Durch die in den vier Eckbereichen der Tischplatte (1) angeordneten Laufkugelpaare (5) läßt sich der Gärtnereitisch einerseits in Längsrichtung der Rohre (4) auf denselben verfahren und kann auch noch zusätzlich mit den Rohren (4) querverfahren werden, indem die Rohre (4) auf dem Erdboden (3) abrollen und der Tisch sich mit seinen Laufkörpern an den sich drehenden Rohren (4) abwälzt, so daß der Tisch von den Rohren (4) mitgenommen wird.

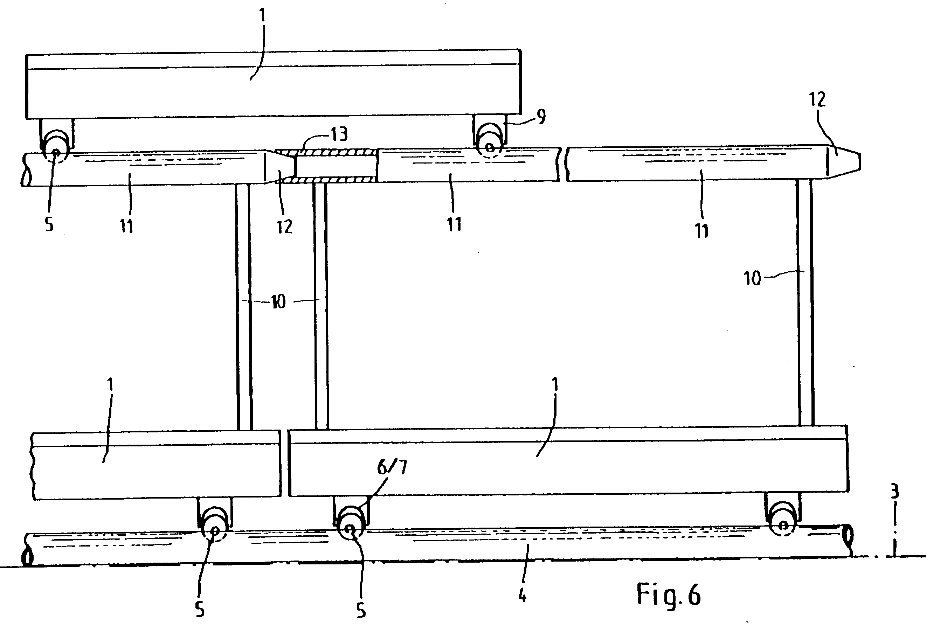

Gemäß der ergänzten Ausführung nach Fig. 6 sind auf der Tischplatte (1) in den beiden Längenendbereichen aufrechte Stützen (10), vorzugsweise je ein aufrechter Tragbügel (10) befestigt und auf diesen Stützen (10) sind zwei parallellaufende Stangen oder Rohre (11) festgelegt, welche Laufschienen für einen darauf in der zweiten Ebene mittels der Laufkörper (5) verfahrbaren Gärtnereitisch bilden.

Dabei kann ein Kupplungsende (12) als abgestufter oder konischer Steckzapfen und das andere Kupplungsende (13) als Steckhülse ausgebildet sein. Werden die Tische aneinandergestellt (zusammengefahren), dann fassen die Kupplungsenden (12, 13) der Stangen oder Rohre (11) ineinander und es werden über sämtliche aneinandergereihte Gärtnereitische durchgehende Laufschienen (11) gebildet, so daß durch eine geeignete Hubvorrichtung, wie Hubwagen, Gabelstapler, od. dgl., ein oder mehrere Gärtnereitische auf diese Laufschienen (11) mit ihren Laufkörpern (5) aufgesetzt und dann mit Abstand oberhalb der unteren Gärtnereitische, unabhängig von denselben längsverfahren und mit denselben querverfahren werden können.

Als Laufkörper (5) können anstelle von Kugeln auch leicht verschiebliche Gleitkörper eingesetzt werden.

Auch könnte jeder Laufkörper 5) von zwei überkreuz ineinander angeordneten und jeweils nur in eine Fahrrichtung wirksam werdenden Rollen gebildet sein.

## Patentansprüche

1. Einrichtung zum Verfahren eines Gärtnereitisches auf Laufschienen (4), wobei der Gärtnereitisch eine rechteckige Tischplatte (1) aufweist, in deren Eckbereichen Laufkörper (5) angeordnet sind und wobei die Laufschienen (4) aus Rohren gebildet werden, dadurch **gekennzeichnet**, daß jeder Laufkörper zwei Laufkugeln (5) aufweist, die in einem gemeinsamen bzw. jeweils eigenen Gehäuse (6, 7) allseitig frei drehbar gelagert sind, wobei die die beiden Laufkugeln (5) mit ihrem Kalottenbereich (5a) freigebenden Stirnseiten (6a, 7a) des bzw. der Gehäuse (6, 7) schräg zur Tischplattenebene stehen und mit den Laufkugeln (5) ein Laufprisma unter Zweipunktanlage an dem auf dem Erdboden freiliegenden Rohr (4) bilden.

2. Einrichtung nach Anspruch 1, dadurch **gekennzeichnet**, daß die beiden Laufkugeln (5) in einem gemeinsamen einteiligen Gehäuse (6) gelagert sind, das mit einem Gehäuseflansch (6b) durch Schrauben (8) oder dergleichen unter der Tischplatte (1) befestigt ist (Figur 5).

3. Einrichtung nach Anspruch 1, dadurch **gekennzeichnet**, daß die beiden Laufkugeln jeweils in einem eigenen Gehäuse (7) gelagert sind, das mittels einer Halterung (9) und durch Schrauben (8) oder dergleichen unter der Tischplatte (1) befestigt ist (Figur 4).

4. Einrichtung nach einem der Ansprüche 1 bis 3, dadurch **gekennzeichnet**, daß auf der Tischplatte (1) in den beiden Längenendbereichen aufrechte Stützen (10), vorzugsweise je ein aufrechter Tragbügel (10) befestigt ist und diese Stützen (10) zwei parallel laufende Stangen oder Rohre (11) im Abstand oberhalb der Tischplatte (1) tragen, die Laufschienen für einen darauf in der zweiten Ebene mittels der Laufkörper (5) verfahrbaren Gärtnereitisch bilden.

5. Einrichtung nach Anspruch 4, dadurch **gekennzeichnet**, daß die Stangen oder Rohre (11) mit beiden Enden über die Tischplatte (1) hinausragen und ineinandersteckbare Kupplungen (12, 13) für aneinanderzureihende Gärtnereitische aufweisen und über die aneinandergereihten Gärtnereitische durchgehende Laufschienen bilden.

6. Einrichtung nach Anspruch 5, dadurch **gekennzeichnet**, daß ein Kupplungsende (12) als abgestufter oder konischer Steckzapfen und das andere Kupplungsende (13) als Steckhülse ausgebildet ist.

## Claims

1. Device for moving a horticulture table on rails (4) in which the horticulture table comprises a rectangular table top (1) in the corner regions of which running bodies (5) are disposed and in which the rails (4) are formed by tubes, characterized in that each running body comprises two running balls (5) which are mounted universally freely rotatably in a common housing or respective individual housings (6,7), the faces (6a, 7a) of the housing or housings (6, 7) which leave the cap regions (5a) of the two running balls (5) free being inclined to the plane of the table top and forming, with the running balls (5), a running V-block with two-point arrangement on the pipe (4) exposed on the floor.

2. Device according to Claim 1, characterized in that the two running balls (5) are mounted in a common unitary housing (6) which is fixed under the table top (1) by a housing flange (6b) by means of screws (8) or the like (Figure 5).

3. Device according to Claim 1, characterized in that each of the two running balls is mounted in a respective individual housing (7) which is fixed under the table top (1) by means of a mounting (9) and by means of screws (8) or the like (Figure 4).

4. Device according to any one of Claims 1 to 3, characterized in that upright supports (2), preferably respective support frames (1), are fixed on the table top (1) in both longitudinal end regions and these supports (10) carry two parallel rods or pipes (11) which extend above and spaced from the table top (1) and form rails for a horticulture table movable thereon in the second plane by means of the running balls (5).

5. Device according to Claim 4, characterized in that the rods or pipes (11) project beyond the table top (1) at both ends and comprise couplings (12, 13) which can be fitted into one another for horticulture tables which are to be combined, forming continuous rails over the combined horticulture tables.

6. Device according to Claim 5, characterized in that one coupling end (12) is formed as a stepped or conical connector pin and the other coupling end (13) is formed as a connector socket.

## Revendications

1. Dispositif pour le déplacement d'une table d'horticulture sur des rails de roulement (4), la table d'horticulture présentant un dessus de table (1) de forme rectangulaire dans les coins duquel sont disposés des éléments de roulement (5), et les rails de roulement (4) étant constitués de tubes, **caractérisé en ce** que chaque élément de roulement comporte deux billes de roulement (5) montées dans un boîtier (6, 7) commun ou des boîtiers séparés, de façon à pouvoir tourner librement dans tous les sens, les surfaces frontales (6a, 7a) du ou des boîtier(s) (6, 7) qui laisse libre une section de calotte (5a) des deux billes de roulement (5), étant inclinées par rapport au plan du dessus de table et formant avec les billes de roulement (5) un prisme de roulement avec appui en deux points sur le tube (4) disposé librement sur le sol.

2. Dispositif selon la revendication 1, caractérisé en ce que les deux billes de roulement (5) sont montées dans un boîtier (6) commun d'un seul tenant qui est fixé sous le dessus de table (1) par une bride de boîtier (6b) au moyen de vis (8) ou analogues (fig. 5).

3. Dispositif selon la revendication 1, caractérisé en ce que les deux billes de roulement sont montées chacune dans un boîtier (7) séparé qui est fixé au moyen d'un support (9) et de vis (8) ou analogues sous le dessus de table (1) (fig. 4).

4. Dispositif selon l'une quelconque des revendications 1 à 3, caractérisé en ce que sur le dessus de table (1), dans les deux sections terminales dans le sens longitudinal, sont fixés des montants (10), de préférence à chaque fois un étrier de support (10), et que lesdits montants (10) portent au-dessus du dessus de table (1), à distance l'un de l'autre, deux barres ou tubes (11) parallèles qui forment des rails de roulement sur lesquels une table d'horticulture peut être déplacée dans un second plan, au moyen des éléments de roulement (5).

5. Dispositif selon la revendication 4, caractérisé en ce que les barres ou tubes (11) dépassent aux deux extrémités du dessus de table (1) et comportent des dispositifs d'accouplement (12, 13) emboîtables pour assembler des tables d'horticulture contiguës et pour former sur les tables d'horticulture assemblées, des rails de roulement continus.

6. Dispositif selon la revendication 5, caractérisé en ce qu'une extrémité d'accouplement (12) est conformée en broche d'emboîtement étagée ou conique et que l'autre extrémité d'accouplement (13) présente la forme d'une douille d'emboîtement.
